# EUROPEAN PATENT APPLICATION

(11) **EP 4 641 921 A1**
(43) Date of publication of application: **29.10.2025**
(21) Application number: 25156681.6
(22) Date of filing: 07.02.2025
(51) Int. Cl.: H02S 20/00, H02S 20/10

(54) **GROUND-MOUNTED SUPPORT STRUCTURE FOR PHOTOVOLTAIC PANELS**

(30) Priority: 23.04.2024 PL 44839524
(71) Applicant: Dorynek, Krzysztof, 83-200 Starogard Gdanski (PL)
(72) Inventor: Dorynek, Krzysztof, 83-200 Starogard Gdanski (PL)
(74) Representative: AOMB Polska Sp. z.o.o.

(57) **Abstract**

The subject of the invention is a ground-mounted support structure for photovoltaic panels. The ground-mounted support structure comprises brackets, a load-bearing beam, and a post embedded in the ground, **characterized in that** the post (1) has openings (1.2) in its underground section, and the post (1) is a closed profile.

## Description

### Technical Field

The subject of the solution is a ground-mounted support structure for photovoltaic panels. The disclosed solution relates to a support structure for photovoltaic panels, in which the posts are embedded in the ground.

### Background

The current development trend in photovoltaic systems is bifacial panels, meaning double-sided panels. The use of reflected light on the rear side of the panel redefines the requirements imposed on support structures. Tall post structures are particularly advantageous, as they minimize shading effects caused by structural elements and provide greater access to light on the underside of the panel.

Such structures, when placed directly on the ground, require the embedding of structural elements in the soil to ensure adequate stability. Known in the state of the art are freestanding post-type support structures designed for bifacial panels, where the post structures are embedded in the ground.

European Patent No. EP 3 608 605 B1 discloses a post-type support structure anchored in the ground. In the presented embodiment, the supporting elements are single posts anchored into the substrate. Alternatively, they may be part of a base structure anchored in the substrate. A load-bearing beam is rotatably mounted on the posts, and the proposed connection solution allows the beam to rotate along its central axis.

There is also a large group of solutions that provide for mounting posts in a prepared ground structure or a foundation designed for this purpose (e.g., US 10 008 975 B2, US 10 469 025 B2, US 11 296 649 B2, US 9 970 686 B2).

Post-type support structures typically use additional anchoring elements for the post or foundations. The solutions used so far require additional earthworks.

### Summary

The objective of the solution is to propose a support structure that allows the embedding of posts without additional earthworks by driving them into the ground.

According to the solution, the ground-mounted support structure for photovoltaic panels comprises brackets, a load-bearing beam, and a post embedded in the ground. The ground-mounted support structure is characterized in that the post has openings in its underground section, and the post is a closed profile. The openings significantly reduce the force required to drive the post into the ground.

The proposed solution enables the embedding of the post in construction soil without the need for earthworks or heavy equipment. Lightweight automatic pile drivers are sufficient for the driving process.

Preferably, the openings occupy between 2% and 10% of the surface area of the post walls located below the ground level. The proposed surface area of the openings is optimal when analyzing the benefits of reducing the driving force needed to embed the post in the soil while maintaining the stiffness and compressive strength required by the closed profile of the support structure post.

Preferably, the post is a rectangular closed profile.

Particularly preferably, the openings occupy 7% of the surface area of the post walls located below the ground level.

Preferably, symmetrically arranged anchoring arms are positioned on two wider, opposite walls. The symmetrical arrangement ensures even action of the anchoring arms, reducing the risk of the post tilting from the vertical position.

Particularly preferably, the anchoring arms are surfaces cut out from the post walls, maintaining a horizontal bending axis in the lower part of the anchoring arms. When the post is driven into the ground, the anchoring arms do not create additional resistance as they remain within the profile of the post.

During the driving process, the soil is compacted, causing increased pressure on the inner side of the profile. This situation causes the anchoring arms to expand outward, securing the post in the ground. When the post is extracted from the soil, the pressure of the soil against the anchoring arms forces them to open even further, thereby increasing the force required to remove the post.

Preferably, cuts are present along the bending axis of the wall. Appropriate cuts in the post wall along the bending axis reduce the cross-section of the wall material subjected to the bending process, thereby decreasing the force required to bend the anchoring arm.

Preferably, the openings are located on two wider, opposite walls.

Preferably, the openings are perpendicular to the walls and pass through the entire profile of the post.

Preferably, the openings have a substantially rectangular shape.

Preferably, the ground-mounted support structure comprises at least one load-bearing beam detachably connected to the post and supporting at least two brackets arranged parallel to each other, transversely mounted with respect to the load-bearing beam, wherein subsequent load-bearing beams are butt-connected by means of connecting means.

### Brief description of the figures

The subject of the solution is illustrated with examples that do not limit its scope. The solution is presented in the drawings:
- Fig. 1 - Side view of the ground-mounted support structure
- Fig. 2 - Front view of the ground-mounted support structure
- Fig. 3 - Axonometric view of the assembled, two-module support structure
- Fig. 4 - Axonometric view of the two-module support structure in a disassembled state
- Fig. 5 - Anchoring arm in a disassembled state

### Detailed description

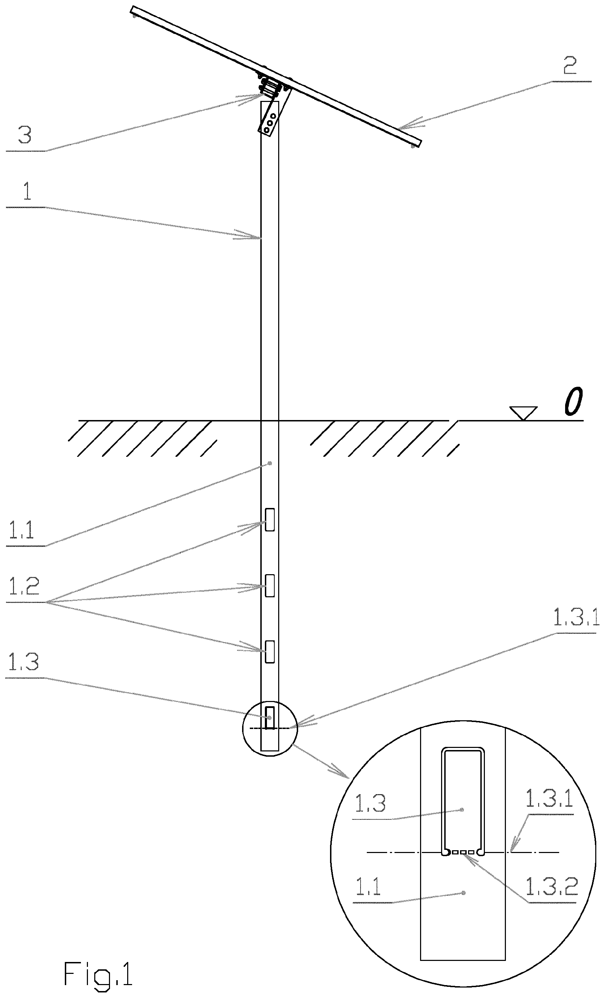

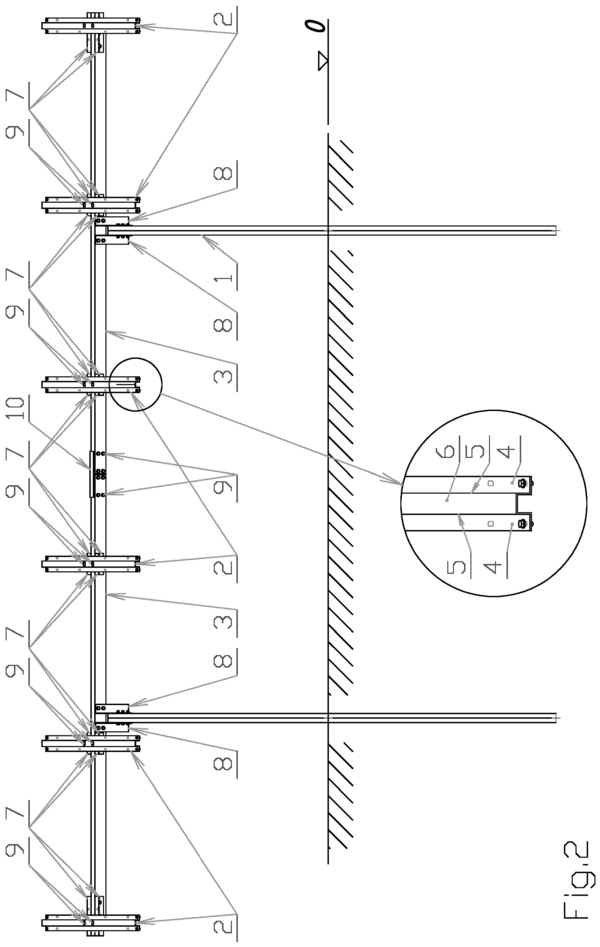

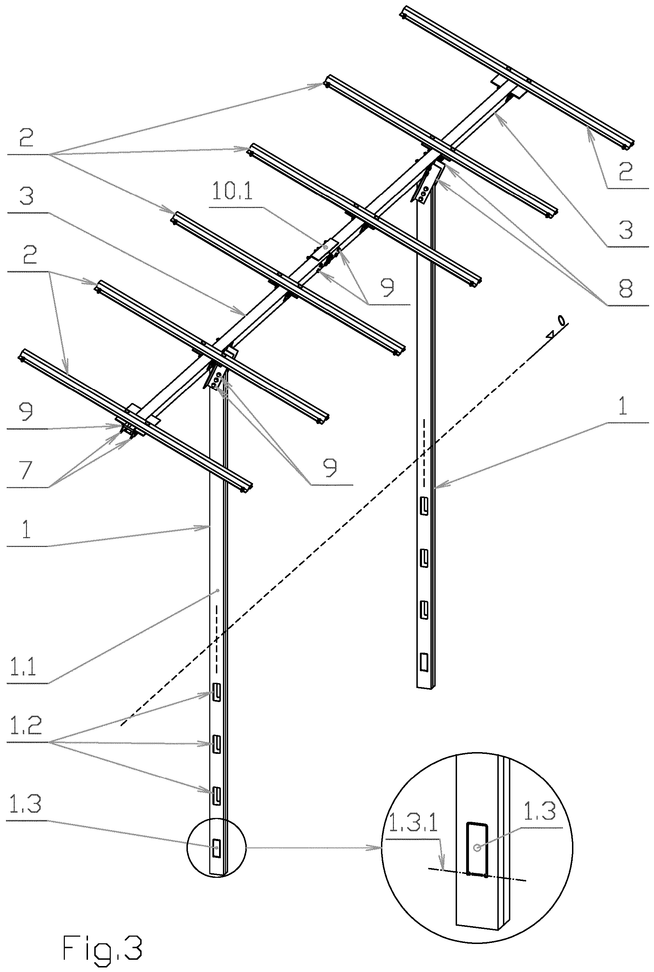

In Fig. 1, Fig. 2, and Fig. 3, the first embodiment of the ground-mounted support structure for five photovoltaic panels is presented, comprising six brackets 2, two load-bearing beams 3, and two posts 1, where post 1 is a rectangular closed profile.

In the underground section of post 1, there are six openings 1.2, occupying 7% of the surface area of the post walls 1.1 located below the ground level. The exemplary post 1 is a closed profile with dimensions of 100 mm × 40 mm, a thickness of 3 mm, and a length of 2.6 m, with 1.5 m of the post designed to be embedded in the ground.

On two wider, opposite walls 1.1, there are three rectangular openings 1.2 with rounded corners, arranged one below the other. The openings 1.2 are perpendicular to the walls 1.1 and pass through the entire width of post 1.

Below the openings 1.2, symmetrically arranged anchoring arms 1.3 are positioned. These arms are rectangular surfaces with rounded corners, cut out from the walls 1.1 of posts 1, while maintaining a horizontal bending axis 1.3.1 in the lower part of the anchoring arms 1.3. Cuts 1.3.2 are present along the bending axis 1.3.1 of the walls 1.1.

Each load-bearing beam 3 is detachably connected to post 1 using two angle brackets 8 and supports three brackets 2. The load-bearing beams 3 are butt-connected using connecting means, including a C-shaped profile enclosing the load-bearing beams 3 and eight bolted connections (bolt, washers, nut).

The brackets 2 are transversely mounted at a generally central point on the load-bearing beam 3, at distances adjusted to the width of the photovoltaic panels. The brackets 2 are thin-walled open-section profiles containing two support walls 4 and stop walls 5 perpendicular to them, connected by a connecting wall 6.

The plane of the stop walls 5 is generally vertical, while the support walls 4 of all brackets 2 in the structure lie in a single plane. The two support walls 4 of adjacent brackets 2 are positioned between the stop walls 5. The distance between the stop walls 5 of adjacent brackets 2 is 2 mm greater than the width of the photovoltaic panel. Alternatively, this width may be increased by a maximum of 20 mm beyond the width of the photovoltaic panel.

The connection is made using two support parts 7 (angle brackets) fastened to opposite sides of the load-bearing beam 3 and attached with their upper surface to the connecting wall 6 of bracket 2, using connecting means 9 (standard bolted connection elements).

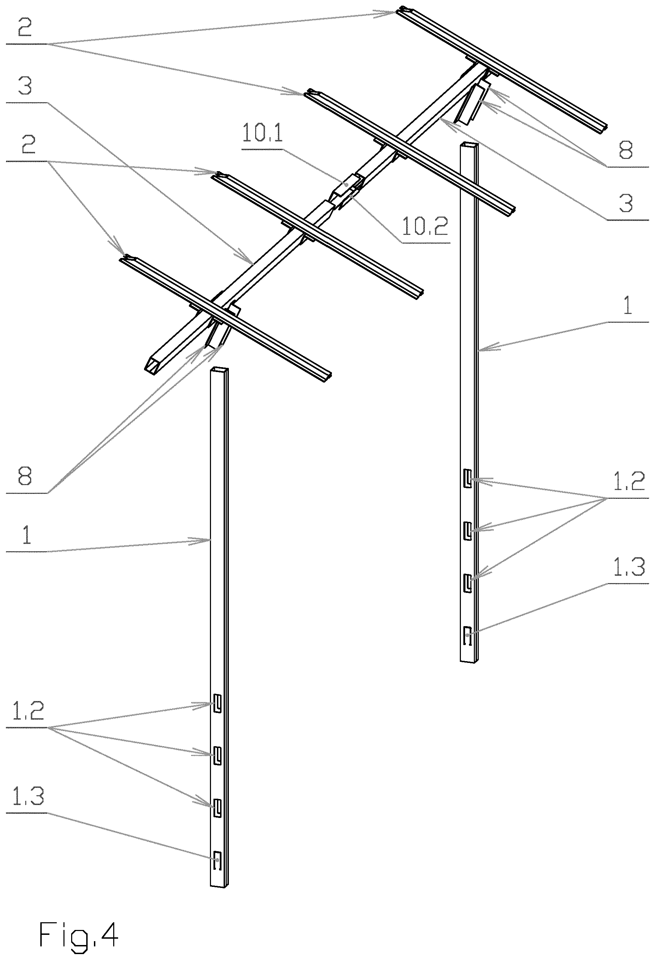

In another embodiment shown in Fig. 4, the structure differs from the first embodiment in that there are four brackets 2, arranged in pairs on the load-bearing beam 3, and no cuts 1.3.2 are present along the bending axis. In the disassembled state, the connecting elements 10 of the load-bearing beams 3 are visible-a C-shaped clamp 10.1, fitted to the outer surface of the load-bearing beams 3, and an insert 10.2, shaped as a rectangular plate, fitted to the inner surface of the side wall of the load-bearing beam 3, through which the connecting means 9 are guided to complete the connection.

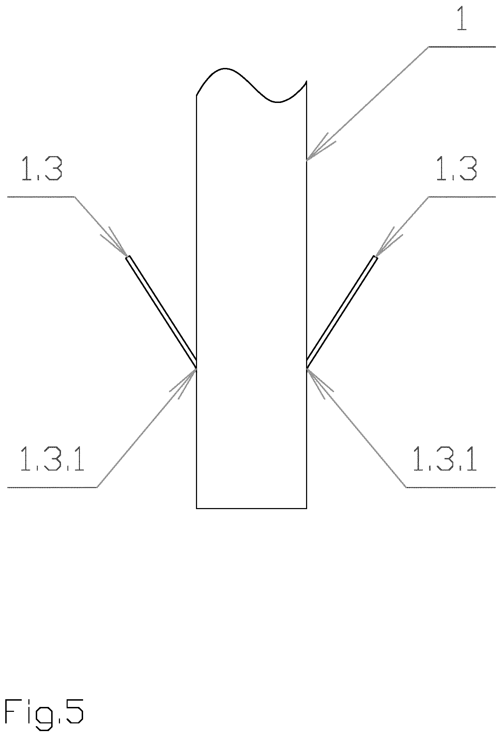

Fig. 5 shows the anchoring arms 1.3 in the disassembled state.

## Claims

1. A ground-mounted support structure for photovoltaic panels comprising brackets, a load-bearing beam, and a post embedded in the ground,
**characterized in that**
the post (1) has openings (1.2) in its underground section, and the post (1) is a closed profile.

2. The ground-mounted support structure according to claim 1, wherein the openings (1.2) occupy between 2% and 15% of the surface area of the walls (1.1) of the post (1) located below the ground level.

3. The ground-mounted support structure according to claim 1 or 2, wherein the post (1) is a rectangular closed profile.

4. The ground-mounted support structure according to claim 3, wherein the openings (1.2) occupy between 6% and 8% of the surface area of the walls (1.1) of the post (1) located below the ground level.

5. The ground-mounted support structure according to claim 1, 2, 3, or 4, wherein symmetrically arranged anchoring arms (1.3) are positioned on two wider, opposite walls (1.1).

6. The ground-mounted support structure according to claim 2, 3, 4, or 5, wherein the anchoring arms (1.3) are surfaces cut out from the walls (1.1) of the posts (1), with a horizontal bending axis (1.3.1) maintained in the lower part of the anchoring arms (1.3).

7. The ground-mounted support structure according to claim 6, wherein cuts (1.3.2) are present along the bending axis (1.3.1) of the wall (1.1).

8. The ground-mounted support structure according to at least one of the preceding claims, wherein the openings (1.2) are located on two wider, opposite walls (1.1).

9. The ground-mounted support structure according to at least one of the preceding claims, wherein the openings (1.2) are perpendicular to the walls (1.1) and pass through the entire profile of the post (1).

10. The ground-mounted support structure according to at least one of the preceding claims, wherein the openings (1.2) have a substantially rectangular shape.

11. The ground-mounted support structure according to at least one of the preceding claims, wherein it comprises at least one load-bearing beam (3) detachably connected to the post (1) and supporting at least two brackets (2) arranged parallel to each other, transversely mounted with respect to the load-bearing beam (3), wherein subsequent load-bearing beams (3) are butt-connected by means of connecting elements (10).
